# EUROPEAN PATENT SPECIFICATION

(11) **EP 3 669 091 B1**
(45) Date of publication and mention of the grant of the patent: **22.02.2023**
(21) Application number: 18756056.0
(22) Date of filing: 31.07.2018
(51) Int. Cl.: F16B 37/06, F16K 3/24, F16K 27/02, F16K 27/10

(54) **WELD STUDS FOR USE IN FLUID CONTROL BODIES**
SCHWEISSBOLZEN ZUR VERWENDUNG IN FLUIDREGELUNGSKÖRPERN
GOUJONS DE SOUDURE DESTINÉS À ÊTRE UTILISÉS DANS DES CORPS DE COMMANDE DE FLUIDE

(30) Priority: 17.08.2017 US 201715679976
(43) Date of publication of application: 24.06.2020
(73) Proprietor: Fisher Controls International LLC, Marshalltown, IA 50158 (US)
(72) Inventor: ADAMS, Daniel, Martin, Marshalltown, IA 50158 (US)
(74) Representative: Foot, Paul Matthew James
(86) International application number: PCT/US2018/044463
(87) International publication number: WO 2019/036182

(56) References cited:
- WO-A1-2009/015095
- CN-U- 205 781 026
- US-A- 1 986 415
- US-A- 3 804 118
- US-A- 3 834 666
- US-A- 4 127 310
- US-A- 4 795 171
- US-A1- 2006 138 375

## Description

### FIELD OF THE DISCLOSURE

This disclosure relates generally to fluid control bodies and, more particularly, to weld studs for use in fluid control bodies.

### BACKGROUND

Pressure retaining devices typically include two bodies attached to one another via a bolted joint to retain pressure relative to the atmosphere. Threaded studs and nuts are commonly used to join the two bodies together. For instance, pressure retaining devices such as fluid control valves generally include a valve body and a bonnet joined to the valve body. The valve body includes threaded holes to accept threaded studs and the bonnet includes clearance holes for the studs to pass through. Nuts are threaded onto the ends of the studs passing through the bonnet to retain the bonnet to the valve body. To comply with industry standards, the valve body must have a minimum wall thickness around the threaded stud. This adds significant height and weight (and, thus, costs) to the valve body. In some instances, the threaded stud must also be lubed and double nutted before insertion into the valve body, which further increases time and costs associated with manufacture of the fluid control valve. US 2006/138375 discloses a balanced plug-style control valve and bonnet seal assembly, and US 3804118 discloses a gas range manifold with control valve mounting means. US1,1986,415 discloses another prior art valve with welded studs.

### SUMMARY

An example apparatus disclosed herein includes a bonnet having a channel; a valve body having a surface to which the bonnet is to be coupled; a bore extending into a surface of the valve body, the bore defined by a side wall and a bottom wall of the valve body, wherein the bore is not threaded; and a weld stud welded to the valve body in the bore, the weld stud having a first end welded to the bottom wall.

The weld stud of the example apparatus includes a first portion not having threads and a second portion including threads, and the first portion of the weld stud is disposed in the bore and the second portion of the weld stud extends outward from the bore and through the channel formed in the bonnet. An example method disclosed herein includes welding a first end of a weld stud to a bottom wall of a valve body in a bore extending into a surface of the valve body, wherein the bore is not threaded, the weld stud includes a first portion not having threads and a second portion including threads, and the first portion of the weld stud is disposed in the bore and the second portion of the weld stud extends outward from the bore. The example method further includes assembling a bonnet to the valve body. The bonnet includes a channel and the second portion of the weld stud extending outward from the bore and through the channel. The example method also includes threading a nut onto the weld stud to secure the bonnet to the valve body.

### BRIEF DESCRIPTION OF THE DRAWINGS

FIG. 1 illustrates a known fluid control valve.
FIG. 2A illustrates a partial cross-sectional view of the fluid control valve of FIG. 1 showing known threaded studs.
FIG. 2B illustrates an enlarged section of FIG. 2A showing one of the known threaded studs.
FIG. 3 illustrates an example weld stud used to couple two structures of a fluid control valve in accordance with an example not belonging to the invention.
FIG. 4 is a flowchart representative of an example method to install the example weld stud of FIG. 3.
FIGS. 5A-5D illustrate an example sequence of installing the example weld stud of FIG. 3 and is described in connection with the example method of FIG. 4.
FIGS. 6A-6C illustrate other example weld studs that may be used in accordance with the teachings of this disclosure.
FIG. 7 illustrates an embodiment of the invention in which the example weld stud of FIG. 3 is disposed in a bore formed the example fluid control valve.

The figures are not to scale. Instead, to clarify multiple layers and regions, the thickness of the layers may be enlarged in the drawings. Wherever possible, the same reference numbers will be used throughout the drawing(s) and accompanying written description to refer to the same or like parts. As used in this patent, stating that any part (e.g., a layer, film, area, or plate) is in any way positioned on (e.g., positioned on, located on, disposed on, or formed on, etc.) another part, means that the referenced part is either in contact with the other part, or that the referenced part is above the other part with one or more intermediate part(s) located there between. Stating that any part is in contact with another part means that there is no intermediate part between the two parts.

### DETAILED DESCRIPTION

Pressure retaining devices such as fluid control devices (e.g., a valve, a pressure regulator, etc.) typically include at least two body portions that are fastened together to create a sealed cavity that holds a pressure relative to atmospheric pressure. Many known pressure retaining devices use threaded studs and nuts to secure the body portions to one another. These known designs require extensive processes to insert the threaded studs into one of the body portions. For instance, a threaded stud usually includes a stop thread to control the depth to which the stud can travel into the body portion so that a specific length of the threaded stud is disposed in the body portion and a specific length extends outward from the body portion. This results in the stud having a specific orientation to be threaded into the body portion. In some instances, the stud may be inadvertently installed backward. As such, the stud must be removed and reinstalled in the correct orientation. Additionally, the threaded stud must often be lubed before insertion to increase the ease of installation and removal. In some instances, the threaded stud must also be double nutted for installation to enable the stop thread to be properly engaged. These processes slow the installation of the threaded stud into the body portion, which incur time and costs. Further, in some instances such as with valve bodies, there must be a minimum wall thickness around the threaded stud in the valve body to comply with industry standards (e.g., American Society of Mechanical Engineers (ASME), American National Standards Institute (ANSI), etc.), which adds considerable height, weight, and, thus, cost to the valve body.

Example pressure retaining devices disclosed herein use weld studs in place of the above-mentioned known threaded studs. By using weld studs instead of threaded studs to secure body portions of a pressure retaining device, the manufacturing and assembling time is reduced. Further, the use of a stop thread is no longer necessary, so the possibility of inserting a stud backward is eliminated. Also, a weld stud does not have to be lubed prior to insertion. Additionally, weld studs are significantly shorter than threaded studs and do not extend as far into the body of the pressure retaining device (if at all) as the threaded stud. Thus, complying with the minimum wall thickness requirements does not add extra height and weight to the body portions.

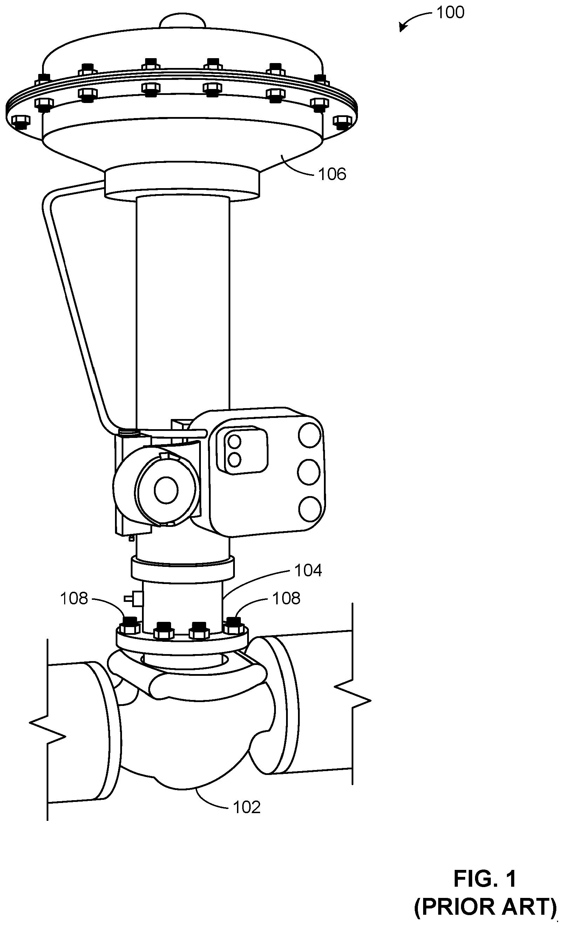

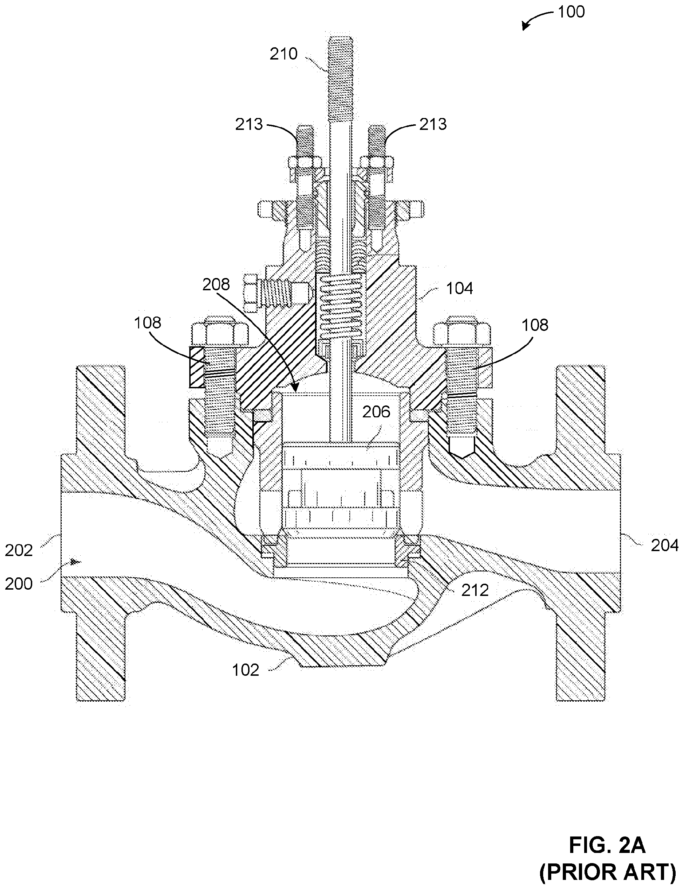

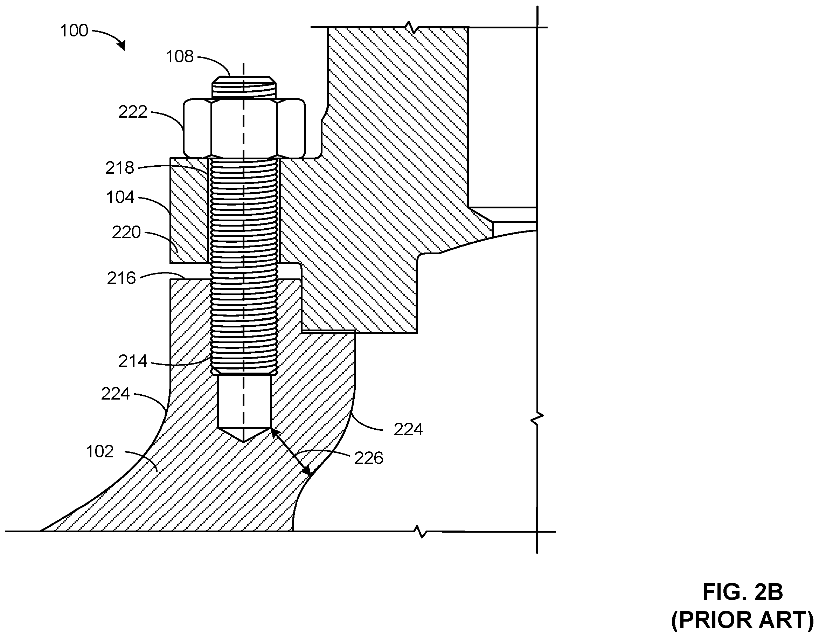

Before describing the details of the example weld studs disclosed herein in connection with the figures, a brief description of a known fluid control valve 100 is provided below in connection with FIGS. 1, 2A, and 2B. As shown in FIG. 1, the fluid control valve 100 includes a valve body 102, a bonnet 104, and an actuator 106. Known threaded studs 108 (two of which are referenced in FIG. 1) are used to secure the bonnet 104 to the valve body 102.

As illustrated in FIG. 2A, the valve body 102 defines a fluid flow path 200 between a first inlet/outlet 202 to a second inlet/outlet 204. A control member 206 (e.g., a plug) is disposed within a cavity 208 of the valve body 102 and is coupled to a valve stem 210. The valve stem 210 is coupled to the actuator 106 (FIG. 1), which moves the valve stem 210 to change the position of the control member 206 within the cavity 208 and thereby modify the rate of fluid flow through the fluid flow path 200 between the first inlet/outlet 202 and the second inlet/outlet 204. In particular, the control member 206 is moveable toward or away from a seat ring 212. To close the valve 100, the control member 206 is moved into engagement with the seat ring 212, thereby preventing fluid flow through the valve body 102. To open the valve 100, the control member 206 is moved away from the seat ring 212, which allows fluid to flow through the fluid flow path 200 between the first inlet/outlet 202 and the second inlet/outlet 204. As shown in FIG. 2A, the cavity 208 is defined by the valve body 102 and the bonnet 104, which are coupled by the threaded studs 108 to seal the cavity 208 from the ambient environment and retain pressure (and the fluid) within the valve body 102. The fluid control valve 100 of FIG. 2A also packing studs 213, which can be replaced by example weld studs in accordance with one or more principles of this disclosure and disclosed in further detail herein.

FIG. 2B illustrates an enlarged view of one of the threaded studs 108 from FIG. 2A. As shown in FIG. 2B, the threaded stud 108 secures the bonnet 104 to the valve body 102. The threaded stud 108 is partially disposed within a threaded bore 214 formed in a surface 216 of the valve body 102. The threaded stud 108 extends outward from the threaded bore 214 and through a channel 218 (e.g., a clearance hole) in a flange 220 of the bonnet 104. A nut 222 is coupled to the threaded stud 108 to fasten the bonnet 104 to the valve body 102.

The threaded bore 214 is formed by drilling and tapping into the valve body 102. As shown in FIG. 2B, the threaded bore 214 is relatively deep to ensure sufficient threaded engagement between the threaded stud 108 and the threaded bore 214. Further, a portion of the threaded bore 214 formed by the pilot/guide holes extends further than the threaded portion of the threaded bore 214. As a result, the valve body 102 needs to have a greater thickness to ensure a sufficient amount of material exists around the threaded bore 214 to comply with industry standards (e.g., ASME, ANSI, etc.). In particular, in FIG. 2B, the threaded stud 108 is separated from a wall 224 of the valve body 102 by a first material thickness 226. The first material thickness 226 represents a minimum thickness between the threaded stud 108 and the wall 224 that must be provided to meet industry standards. The industry standards must be met because the casting may contain porosity or voids that occur during solidification of the molten metal. In particular, when drilling and tapping into the cast material, it is possible to drill into a region that has a void or an area of porosity. These voids may lead to the sealed cavity causing a leak in the pressure retaining device. Therefore, abiding by the industry standards requires additional height and weight to be added to the valve body, which increases the cost of manufacturing the fluid control valve 100.

In some instances, the threaded stud 108 includes a stop thread to prevent the threaded stud from being threaded to the bottom of the threaded bore 214. However, if the threaded stud 108 is inadvertently installed backward, the threaded stud 108 may be threaded into the threaded bore 214 too deep or not enough, thereby leaving the wrong length of the threaded stud 108 inside and outside of the threaded bore 214. In such an instance, the threaded stud 108 has to be removed and reinstalled in the correct orientation. This process requires additional time and costs when manufacturing the fluid control valve 100.

In some instances, the bonnet 104 and the valve body 102 may need to be disassembled (e.g., to replace a gasket in the fluid control valve 100). In such an instance, the nut 222 is to be unscrewed from the threaded stud 108. However, often times the nut is corroded and/or otherwise stuck on the threaded stud 108. As such, the threaded stud 108 is unscrewed from the valve body 102 as the nut 222 is turned. In some instances, after removal of the nut 222 and the threaded stud 108, the nut 222 has to be removed from the threaded stud 108 using a separate process and properly reinstalled. These tasks further increase the manufacturing and assembling time of the fluid control valve 100. In other instances, an overhanging portion of the valve may be disposed directly above the nut and the threaded stud 108 that may prevent the threaded stud 108 from being removed. In such an instance, significant machining is needed to dissemble the parts.

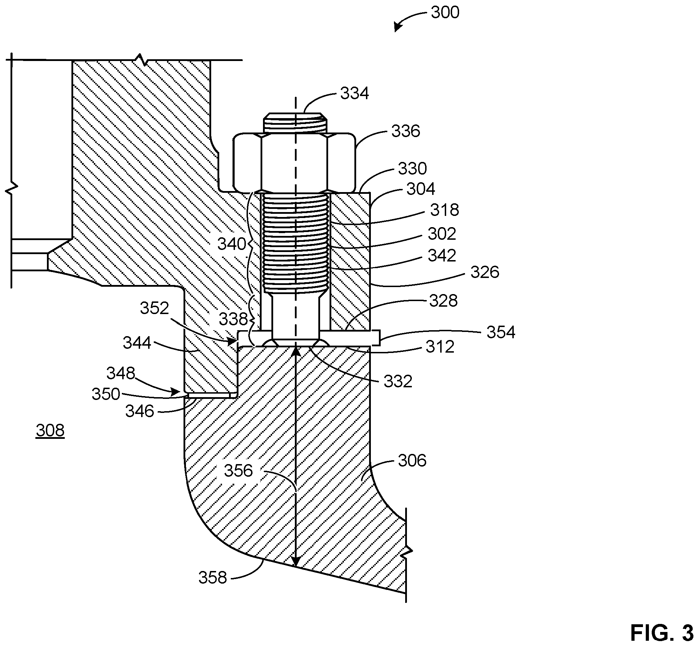

FIG. 3 illustrates an example fluid control valve 300 using an example weld stud 302 in accordance with the teachings of this disclosure. The example weld stud 302 may be used to couple two structures (e.g., bodies) of the fluid control valve 300. In the illustrated example, the example weld stud 302 is used to secure an example bonnet 304 to an example valve body 306 (e.g., a fluid control body) to form a sealed cavity 308 to retain pressure. The example weld stud 302 may be used in place of any of the threaded studs 108 of the fluid control valve 100 of FIGS. 1-2B, for example. The illustrated example shows only one example weld stud 302 securing the example bonnet 304 to the example valve body 306. However, in other examples, there may be multiple, annularly-spaced weld studs 302 to secure the bonnet 304 to the valve body 306.

In the illustrated example of FIG. 3, the valve body 306 includes a surface 312 to which the bonnet 304 is to be coupled. The weld stud 302 extends outward from the surface 312 and through a channel 318 (otherwise known as a clearance hole or through-hole) formed in the bonnet 304. In the illustrated example, the channel 318 is formed in a flange 326 of the bonnet 304 between a lower flange surface 328 and an upper flange surface 330. However, in other examples, the channel 318 may be formed in another portion of the bonnet 304.

In the illustrated example, a first end 332 of the weld stud 302 is welded to the surface 312 of the valve body 306. In some examples, the example weld stud 302 is welded to the surface 312 of the valve body 306 with a weld stud gun. However, in other examples, the weld stud 302 may be welded to the surface 312 using another welding device. In this example, the valve body 306 is composed of metal. However, in other examples, the valve body 306 may be composed of any other material(s) suitable for retaining pressure.

A second end 334 of the weld stud 302, opposite the first end 332, extends outward from the channel 318 of the bonnet 304 and accepts a threaded nut 336. The threaded nut 336 may be threaded onto the weld stud 108 until it contacts the upper flange surface 330 of the bonnet 304, for example. The threaded nut 336 may be further tightened to further fasten the bonnet 304 and the valve body 306.

In the illustrated example, the weld stud 302 includes a first portion 338 and a second portion 340: the first portion 338 not including threads and having a smooth cylindrical surface and the second portion 340 including threads 342. However, in other examples, the first portion 338 of the weld stud 302 may be threaded. In other words, the entire weld stud 302 may be threaded.

In the illustrated example, the bonnet 304 includes an extension 344 that extends into a notch 346 formed in the surface 312 of the valve body 306. As illustrated in FIG. 3, the extension 344 and the notch 346 form a seal gland 348 for a seal 350 (e.g., an o-ring, a gasket, etc.), which helps seal the sealed cavity 308. In the illustrated example, the extension 344 and the notch 346 are dimensioned such that when the bonnet 304 is coupled to the valve body 306, a gap 352 having a gap height 354 is formed between the surface 312 of the valve body 306 and the lower flange surface 328 of the bonnet 304. In other words, when the bonnet 304 is assembled to the valve body 306, the surface 312 and the lower flange surface 328 are spaced apart from each other. In this example, the gap 352 surrounds the weld stud 302. However, in other examples, the extension 344 and the notch 346 may be sized such that the gap height 354 may be smaller or larger. In some examples, the surface 312 of the valve body 306 and the lower flange surface 328 of the bonnet 304 may be in contact.

As shown in FIG. 3, a second thickness 356 of material is defined between the surface 312 of the valve body 306 and a wall 358 of the valve body 306. Depending on the application, the second thickness 356 must meet the same industry requirements as the threaded stud 108 of FIGS. 2A and 2B. However, because the weld stud 302 does not extend into the valve body 306, the valve body 306 can be significantly smaller (e.g., narrower, shorter, etc.) while still satisfying industry standards (e.g., ASME, ANSI, etc.). This results in decreased height, weight, and cost during the manufacturing process. Thus, while the valve body 306 may appear wider in FIG. 3, the valve body 306 can be narrowed or shortened to reduce the amount of material used to manufacture the valve body 306.

Also, unlike known threaded studs that may be inadvertently unscrewed when trying to remove the nut, the example weld stud 302 is fixedly coupled to the valve body 306 and, thus, does not turn when the threaded nut 336 is unscrewed. Thus, less time and costs are incurred when performing such tasks. Further, because the weld stud 302 is not threaded into a bore like the threaded stud of FIG. 2B, the need for a stop thread is eliminated and the associated drawbacks are avoided (e.g., having to reinstall the threaded stud).

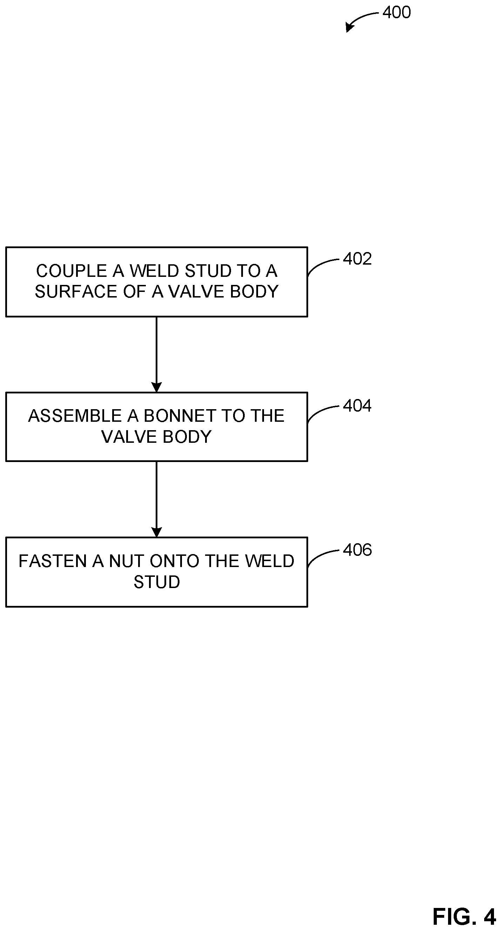

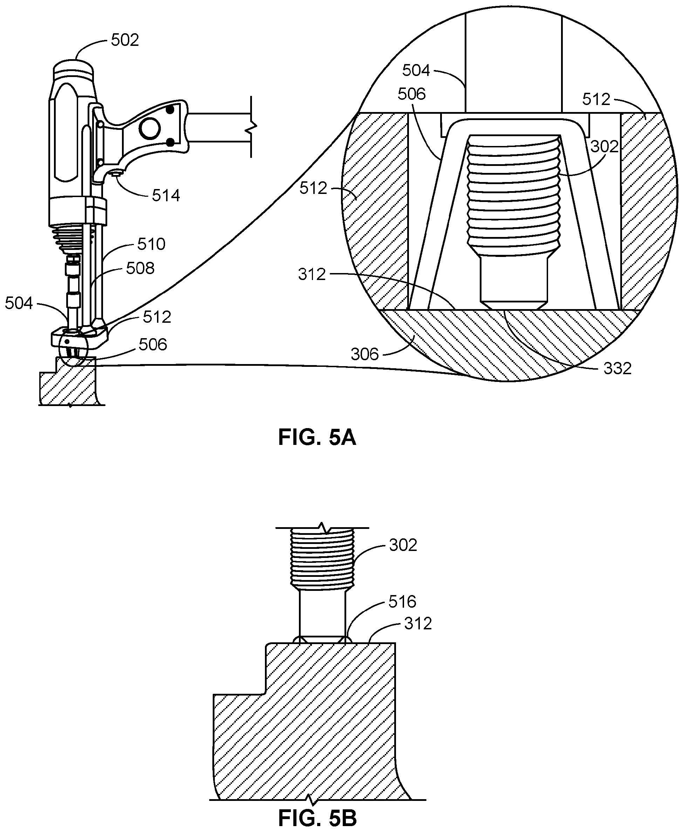

FIG. 4 is a flowchart representative of an example method 400 to install the example weld stud 302 and couple the valve body 306 and the bonnet 304. The example method of FIG. 4 is described in connection with the sequence illustrated in FIGS. 5A-5D.

At block 402, the weld stud 302 is coupled to the surface 312 of the valve body 306. In some examples, as illustrated in FIG. 5A, the weld stud 302 is coupled to the surface 312 by welding the weld stud 302 to the surface 312 using a weld stud gun 502. In the illustrated example of FIG. 5A, the weld stud gun 502 is an arc stud welder. The weld stud gun 502 includes a chuck 504 into which the weld stud 302 and a ferrule 506 (e.g., a ceramic ring) are manually or automatically inserted. The ferrule 506 concentrates the heat generated from the current, prevents oxidation, and retains molten metal in the weld zone. The weld stud gun 502 includes legs 508, 510 that support a foot 512. As shown in the enlarged callout in FIG. 5A, the foot 512 is placed against the surface 312 of the valve body 306 such that the first end 332 of the weld stud 302 and the ferrule 506 contact the surface 312. When a trigger 514 on the weld stud gun 502 is activated (e.g., pushed or pulled), the chuck 504 lifts the weld stud 302 (e.g., away from the surface 312) and initiates a controlled electric arc that melts the first end 332 of the weld stud and a portion of the surface 312 of the valve body 306. As the first end 332 of the weld stud 302 and the surface 312 of the valve body 306 become molten, the weld stud gun 502 is plunged onto the surface 312. As a result, the metal solidifies and a weld section 516 is formed between the weld stud 302 and the surface 312 of the valve body 306, as shown in FIG. 5B. While in the illustrated example the weld stud gun 502 is an arc stud welder, in other examples, other types of welding may be used, such as capacitor-discharge (CD) welding or any other stud welding technique. Further, in other examples, a non-portable welding machine may be used to weld the weld stud 302 to the valve body 306.

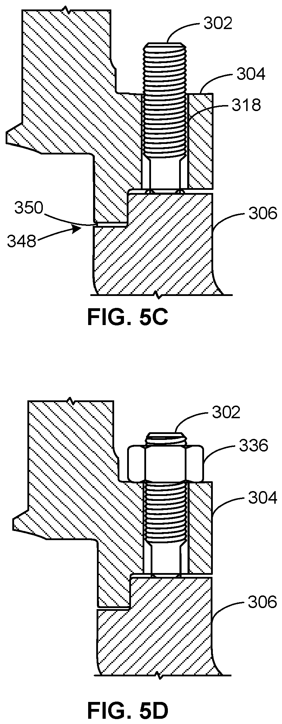

At block 404 of the example method 400, the example bonnet 304 is assembled to the example valve body 306, as shown in FIG. 5C. The bonnet 304 includes the channel 318. The bonnet 304 is placed over the valve body 306 such that the weld stud 302 extends through the channel 318. When assembled, the valve body 306 and the bonnet 304 form the seal gland 348, which may be used to retain the seal 350. At block 406 of the example method 400, the threaded nut 336 is threaded onto the weld stud 302 to secure the bonnet 304 to the valve body 306 as shown in FIG. 5D.

In some examples, the example method 400 is performed multiple times. For example, when constructing the fluid control valve 300, the example method 400 may include the coupling a plurality of weld studs to the surface 312 of the valve body 306 (e.g., spaced annularly around the surface 312), assembling the bonnet 304 to the valve body 306 via the weld studs (such that the weld studs extend through channels in the flange 326 of the bonnet 304), and threading a threaded nut onto each weld stud to secure the bonnet 304 to the valve body 306.

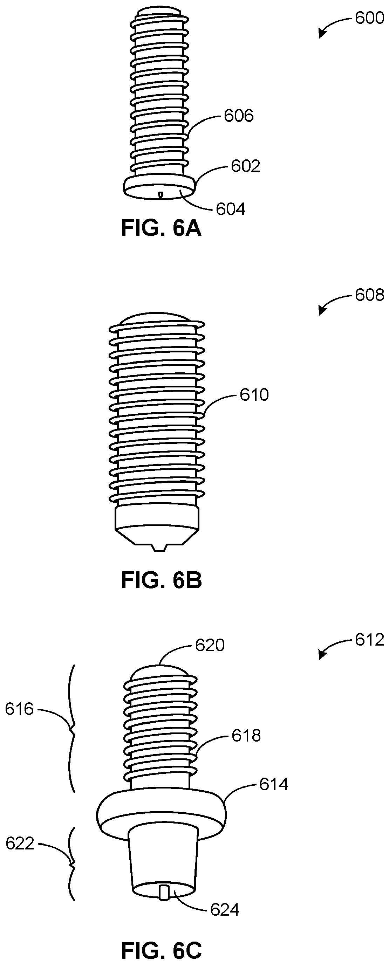

FIGS. 6A-6C illustrate other example weld studs that may be used in addition to or as an alternative to the weld stud 302 to couple two structures of a pressure retaining device, such as the bonnet 304 and the valve body 306 of the fluid control valve 300 of FIG. 3. FIG. 6A illustrates an example flanged weld stud 600 that is used for CD welding. The flanged weld stud 600 includes a flange 602 at a first end 604. The flanged weld stud 600 further includes threads 606 that run the entire length of the flanged weld stud 600. FIG. 6B illustrates an example full thread weld stud 608 that is commonly used for arc stud welding (e.g., as described in connection with FIGS. 4-5D). The full thread weld stud 608 includes threads 610 that run the entire length. FIG. 6C illustrates an example collar weld stud 612 that may be used for CD welding. The collar weld stud 612 includes a collar flange 614 that is typically located in the middle of the collar weld stud 612. A first length 616 of the collar weld stud 612 includes threads 618 that run from the collar flange 614 to a first end 620 of the collar weld stud 612. A second length 622 from the collar flange 614 to a second end 624 does not include threads. Any weld stud or welding method may be used to secure the example bonnet 304 to the example valve body 306 as constructed in accordance with the present disclosure.

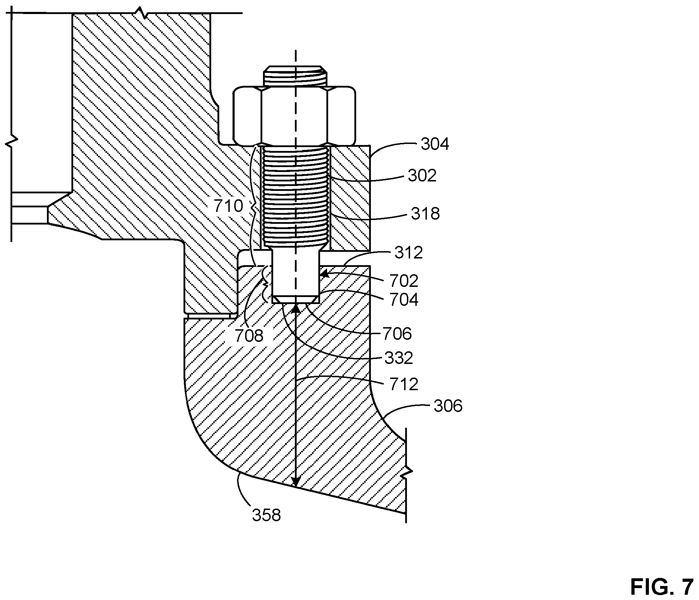

In the illustrated example of FIG. 3, the weld stud 302 is not disposed in a bore formed in the surface 312 of the valve body 306. Thus, a bore does not need to be machined into the valve body 306. However, in other examples, a bore may be used to help align the weld stud 302 with the channel 318 of the bonnet 304. For example, FIG. 7 illustrates an embodiment of the invention in which the weld stud 302 is used to couple the bonnet 304 and the valve body 306. In this example, the valve body 306, includes a bore 702 extending into the surface 312 of the valve body 306. The bore 702 is defined by a side wall 704 and a bottom wall 706. The weld stud 302 is partially disposed in and coupled to the valve body 306 in the bore 702. In particular, a first section 708 of the weld stud 302 is disposed in the bore 702, and a second section 710 of the weld stud 302 extends outward from the bore 702 and through the channel 318 in the bonnet 304. In this example, the second section 710 includes threads.

In the illustrated example, the first end 332 of the weld stud 302 is welded to the bottom wall 706 of the bore 702. In some examples, the example weld stud 302 is welded to the bottom wall 706 with the weld stud gun 502. However, in other examples, the weld stud 302 may be welded to the bottom wall 706 using another welding device. In the illustrated example, the diameter or width of the bore 702 is about the same (e.g., ±0.10 inches; 2.54 mm) diameter or width as the first section 708 of the weld stud 302. In some examples, the first section 708 of the weld stud 302 is in contact with the side wall 704 of the bore 702. In other examples, the bore 702 may be wider than the diameter or width of the first section 708, such that a gap is formed between the first section 708 of the weld stud 302 and the side wall 704 of the bore 702. In the illustrated example, the bore 702 is not threaded. As such, fewer manufacturing processes are needed as compared to the threaded bore 214 in the fluid control valve 100 of FIGS. 1-2B.

As shown in FIG. 7, a third material thickness 712 is defined between the bore 702 and the wall 358 of the valve body 306. Depending on the application, the third material thickness 712 must meet the same industry requirements (e.g., ASME, ANSI, etc.) as the threaded stud 108 of FIGS. 2A and 2B. However, because the bore 702 extends into the valve body 306 less than the threaded bore 214 of FIG. 2B, the valve body 306 can be significantly smaller (e.g., narrower, shorter, etc.) while still satisfying industry standards. This results in decreased height, weight, and cost during the manufacturing process. Thus, while the valve body 306 may appear wider in FIG. 7, the valve body 306 can be narrowed or shortened to reduce the amount of material around the bore 702. Further, in some examples, using the example bore 702 helps align the weld stud 302 in the proper location for receiving the channel 318 of the bonnet 304. An example method of installing the weld stud 302 in this example may be similar the example method 400 of FIG. 4. However, prior to welding the weld stud 302 to the surface 312, the method may include drilling the bore 702 into the surface 312 of the valve body 306.

In the examples disclosed above, the weld stud 302 is described in connection with securing a structure (e.g., the bonnet 304, a vessel, etc.) to the valve body 306. However, it is understood that any of the example weld studs and/or the weld stud methods disclosed herein may be similarly used to secure other structures where threaded joints are traditionally used. For example, the example weld studs and/or techniques disclosed herein may be used in place of a packing stud 213 labeled in FIG. 2A. Further examples may include replacing actuator casing fasteners (e.g., the threaded studs illustrated at the top of FIG. 1), actuator rod connectors, valve stem connector fasteners, or accessory hand-wheel mountings with example weld studs. Still further examples may include replacing any threaded stud, fastener, etc. on a pressure retaining device with an example weld stud.

From the foregoing, it will be appreciated that the above disclosed weld studs enable pressure retaining devices, such as fluid control valves, to be constructed with significantly less material than the known threaded studs. As a result, manufacturing and assembling the fluid control bodies incurs less time and costs.

Although certain example methods, apparatus, and articles of manufacture have been disclosed herein, the scope of coverage of this patent is not limited thereto. On the contrary, this patent covers all methods, apparatus, and articles of manufacture fairly falling within the scope of the claims of this patent.

## Claims

1. An apparatus comprising:
a bonnet (304) having a channel (318);
a valve body (306) having a surface (312) to which the bonnet (304) is to be coupled;
a bore (702) extending into a surface of the valve body (306), the bore (702) defined by a side wall (704) and a bottom wall (706) of the valve body (306), wherein the bore (702) is not threaded; and
a weld stud (302) welded to the valve body (306) in the bore (702), the weld stud (302) having a first end (332) welded to the bottom wall (706); and wherein the weld stud (302) includes a first portion (708) not having threads and a second portion (710) including threads, and
wherein the first portion (708) of the weld stud is disposed in the bore (702) and the second portion (710) of the weld stud (302) extends outward from the bore (702) and through the channel (318) formed in the bonnet (304).

2. The apparatus of any preceding claim, wherein the valve body (306) is composed of metal.

3. The apparatus of any preceding claim, wherein the valve body (306) and the bonnet form a sealed cavity (308).

4. The apparatus of any preceding claim, further comprising a threaded nut (336), the second portion to accept the threaded nut (336) to secure the bonnet (304) to the valve body (306).

5. The apparatus of any preceding claim, further including a threaded nut (336) threaded onto the second portion (710) of the weld stud (302) to secure the bonnet (304) to the valve body (306).

6. A method comprising:
welding a first end of a weld stud (302) to a bottom wall (706) of a valve body (306) in a bore (702) extending into a surface (312) of the valve body, wherein the bore (702) is not threaded, the weld stud (302) includes a first portion (708) not having threads and a second portion (710) including threads, and the first portion (708) of the weld stud (302) is disposed in the bore (702) and the second portion (710) of the weld stud (302) extends outward from the bore (702);
assembling a bonnet (304) to the valve body (306), the bonnet (304) including a channel (318), the second portion of the weld stud (302) extending outward from the bore (702) and through the channel (318); and
threading a nut (336) onto the weld stud (302) to secure the bonnet (304) to the valve body (306).

7. The method of claim 6, wherein coupling the weld stud (302) to the valve body (306) includes welding the weld stud (302) to the valve body (306) with a weld stud gun.

8. The method of any of claim 6 or claim 7, wherein the valve body (306) and the bonnet (304) form a sealed cavity (308).

9. The method of any of claims 6 to 8, wherein the channel (318) extends through a flange (326) of the bonnet (304) between a lower flange surface (328) and an upper flange surface (330).

10. The method of any of claims 6 to 9, wherein, when the bonnet (304) is assembled to the valve body (306), the surface (312) of the valve body (306) and the lower flange surface of the bonnet (304) are spaced apart from each other.

11. The method of any of claims 6 to 10, further including welding a plurality of weld studs (302) to the valve body (306).

## Patentansprüche

1. Vorrichtung, welche aufweist:
einen Aufsatz (304), der einen Kanal (318) aufweist,
einen Ventilkörper (306), der eine Oberfläche (312) aufweist, mit der der Aufsatz (304) zu verbinden ist,
eine Bohrung (702), die sich in eine Oberfläche des Ventilkörpers (306) erstreckt, wobei die Bohrung (702) durch eine Seitenwand (704) und eine Bodenwand (706) des Ventilkörpers (306) bestimmt ist, und wobei die Bohrung (702) nicht mit einem Gewinde versehen ist, und
einen Schweißbolzen (302), der mit dem Ventilkörper (306) in der Bohrung (702) verschweißt ist, wobei der Schweißbolzen (302) ein erstes Ende (332) aufweist, das mit der Bodenwand (706) verschweißt ist, und wobei der Schweißbolzen (302) einen ersten Abschnitt (708) ohne Gewinde und einen zweiten Abschnitt (710) mit Gewinde aufweist, und
wobei der erste Abschnitt (708) des Schweißbolzens in der Bohrung (702) angeordnet ist und der zweite Abschnitt (710) des Schweißbolzens (302) sich von der Bohrung (702) nach außen und durch den in dem Aufsatz (304) ausgebildeten Kanal (318) erstreckt.

2. Vorrichtung nach einem der vorhergehenden Ansprüche, wobei der Ventilkörper (306) aus Metall besteht.

3. Vorrichtung nach einem der vorhergehenden Ansprüche, wobei der Ventilkörper (306) und der Aufsatz einen abgedichteten Hohlraum (308) bilden.

4. Vorrichtung nach einem der vorhergehenden Ansprüche, welche ferner eine Gewindemutter (336) aufweist, wobei der zweite Abschnitt die Gewindemutter (336) aufnimmt, um den Aufsatz (304) an dem Ventilkörper (306) zu befestigen.

5. Vorrichtung nach einem der vorhergehenden Ansprüche, welche ferner eine Gewindemutter (336) aufweist, die auf den zweiten Abschnitt (710) des Schweißbolzens (302) geschraubt ist, um den Aufsatz (304) an dem Ventilkörper (306) zu befestigen.

6. Verfahren, welches umfasst:
ein Schweißen eines ersten Endes eines Schweißbolzens (302) an eine Bodenwand (706) eines Ventilkörpers (306) in einer Bohrung (702), die sich in eine Oberfläche (312) des Ventilkörpers erstreckt, wobei die Bohrung (702) nicht mit einem Gewinde versehen ist, wobei der Schweißbolzen (302) einen ersten Abschnitt (708) ohne Gewinde und einen zweiten Abschnitt (710) mit Gewinde aufweist, und wobei der erste Abschnitt (708) des Schweißbolzens (302) in der Bohrung (702) angeordnet ist und der zweite Abschnitt (710) des Schweißbolzens (302) sich von der Bohrung (702) nach außen erstreckt,
ein Anbringen eines Aufsatzes (304) an dem Ventilkörper (306), wobei der Aufsatz (304) einen Kanal (318) aufweist, und wobei sich der zweite Abschnitt des Schweißbolzens (302) sich von der Bohrung (702) nach außen und durch den Kanal (318) erstreckt, und
ein Aufschrauben einer Mutter (336) auf den Schweißbolzen (302), um den Aufsatz (304) an dem Ventilkörper (306) zu befestigen.

7. Verfahren nach Anspruch 6, wobei das Verbinden des Schweißbolzens (302) mit dem Ventilkörper (306) ein Schweißen des Schweißbolzens (302) mit dem Ventilkörper (306) mit einer Schweißbolzenpistole umfasst.

8. Verfahren nach einem der Ansprüche 6 oder 7, wobei der Ventilkörper (306) und der Aufsatz (304) einen abgedichteten Hohlraum (308) bilden.

9. Verfahren nach einem der Ansprüche 6 bis 8, wobei sich der Kanal (318) durch einen Flansch (326) des Ventildeckels (304) zwischen einer unteren Flanschfläche (328) und einer oberen Flanschfläche (330) erstreckt.

10. Verfahren nach einem der Ansprüche 6 bis 9, wobei die Oberfläche (312) des Ventilkörpers (306) und die untere Flanschfläche des Aufsatzes (304) voneinander beabstandet sind, wenn der Aufsatz (304) an dem Ventilkörper (306) angebracht wird.

11. Verfahren nach einem der Ansprüche 6 bis 10, das ferner das Anschweißen einer Vielzahl an Schweißbolzen (302) an den Ventilkörper (306) umfasst.

## Revendications

1. Appareil comprenant :
un chapeau (304) ayant un canal (318) ;
un corps de vanne (306) ayant une surface (312) à laquelle le chapeau (304) doit être couplé ;
un alésage (702) s'étendant dans une surface du corps de vanne (306), l'alésage (702) défini par une paroi latérale (704) et une paroi de fond (706) du corps de vanne (306), dans lequel l'alésage (702) n'est pas fileté ; et
un goujon de soudure (302) soudé au corps de vanne (306) dans l'alésage (702), le goujon de soudure (302) ayant une première extrémité (332) soudée à la paroi de fond (706) ; et dans lequel le goujon de soudure (302) comporte une première partie (708) n'ayant pas de filets et une deuxième partie (710) comportant des filets, et
dans lequel la première partie (708) du goujon de soudure est disposée dans l'alésage (702) et la deuxième partie (710) du goujon de soudure (302) s'étend vers l'extérieur à partir de l'alésage (702) et à travers le canal (318) formé dans le chapeau (304).

2. Appareil selon la revendication précédente, dans lequel le corps de vanne (306) est composé de métal.

3. Appareil selon une revendication précédente, dans lequel le corps de vanne (306) et le chapeau forment une cavité scellée (308).

4. Appareil selon une revendication précédente, comprenant en outre un écrou fileté (336), la deuxième partie pour accepter l'écrou fileté (336) pour fixer le chapeau (304) au corps de vanne (306).

5. Appareil selon une revendication précédente, comportant en outre un écrou fileté (336) vissé sur la deuxième partie (710) du goujon de soudure (302) pour fixer le chapeau (304) au corps de vanne (306).

6. Procédé comprenant :
souder une première extrémité d'un goujon de soudure (302) à une paroi de fond (706) d'un corps de vanne (306) dans un alésage (702) s'étendant dans une surface (312) du corps de vanne, dans lequel l'alésage (702) n'est pas fileté, le goujon de soudure (302) comporte une première partie (708) n'ayant pas de filets et une deuxième partie (710) comportant des filets, et la première partie (708) du goujon de soudure (302) est disposée dans l'alésage (702) et la deuxième partie (710) du goujon de soudure (302) s'étend vers l'extérieur à partir de l'alésage (702) ;
assembler un chapeau (304) au corps de vanne (306), le chapeau (304) comportant un canal (318), la deuxième partie du goujon de soudure (302) s'étendant vers l'extérieur à partir de l'alésage (702) et à travers le canal (318) ; et
visser un écrou (336) sur le goujon de soudure (302) pour fixer le chapeau (304) au corps de vanne (306) .

7. Procédé selon la revendication 6, dans lequel coupler le goujon de soudure (302) au corps de vanne (306) comporte souder le goujon de soudure (302) au corps de vanne (306) avec un pistolet à goujons de soudure.

8. Procédé selon l'une de la revendication 6 ou la revendication 7, dans lequel le corps de vanne (306) et le chapeau (304) forment une cavité scellée (308).

9. Procédé selon l'une des revendications 6 à 8, dans lequel le canal (318) s'étend à travers une bride (326) du chapeau (304) entre une surface de bride inférieure (328) et une surface de bride supérieure (330) .

10. Procédé selon l'une des revendications 6 à 9, dans lequel, lorsque le chapeau (304) est assemblé au corps de vanne (306), la surface (312) du corps de vanne (306) et la surface de bride inférieure du chapeau (304) sont espacées l'une de l'autre.

11. Procédé selon l'une des revendications 6 à 10, comportant en outre souder une pluralité de goujons de soudure (302) au corps de vanne (306).
